(19) Europäisches Patentamt / European Patent Office / Office européen des brevets

(11) **EP 2 391 875 B1**

(12) **FASCICULE DE BREVET EUROPEEN**

(45) Date de publication et mention
de la délivrance du brevet:
**23.01.2013 Bulletin 2013/04**

(21) Numéro de dépôt: **10701372.4**

(22) Date de dépôt: **28.01.2010**

(51) Int Cl.:
*G01N 21/84* (2006.01)    *G01J 3/42* (2006.01)
*G01N 21/95* (2006.01)    *G02B 5/00* (2006.01)
*G01J 9/00* (2006.01)

(86) Numéro de dépôt international:
**PCT/EP2010/051009**

(87) Numéro de publication internationale:
**WO 2010/086377 (05.08.2010 Gazette 2010/31)**

(54) **PROCEDE DE MESURE ET PROCEDE DE VISUALISATION D'UNE SURFACE D'ONDE PAR SPECTROPHOTOMETRIE**

VERFAHREN ZUR MESSUNG UND VERFAHREN ZUR BETRACHTUNG EINER WELLENFRONT UNTER VERWENDUNG VON SPEKTROPHOTOMETRIE

METHOD FOR MEASURING AND METHOD FOR VIEWING A WAVEFRONT USING SPECTROPHOTOMETRY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.01.2009 FR 0950613**

(43) Date de publication de la demande:
**07.12.2011 Bulletin 2011/49**

(73) Titulaire: **Commissariat à l'Énergie Atomique et aux Énergies Alternatives
75015 Paris (FR)**

(72) Inventeur: **PIOMBINI, Hervé
F-37320 Esvres sur Indre (FR)**

(74) Mandataire: **Ilgart, Jean-Christophe et al
Brevalex
95, rue d'Amsterdam
75378 Paris Cedex 8 (FR)**

(56) Documents cités:
- **VOARINO P ET AL: "High-accuracy measurements of the normal specular reflectance" APPLIED OPTICS, OSA, OPTICAL SOCIETY OF AMERICA, WASHINGTON, DC, vol. 47, no. 13, 1 mai 2008 (2008-05-01), pages C303-C309, XP001514456 ISSN: 0003-6935**
- **DJURISIC A B ET AL: "Progress in the room-temperature optical functions of semiconductors" MATERIALS SCIENCE AND ENGINEERING R: REPORTS, ELSEVIER SEQUOIA S.A., LAUSANNE, CH, vol. 38, no. 6, 15 août 2002 (2002-08-15), pages 237-293, XP004372710 ISSN: 0927-796X**

## Description

### DOMAINE TECHNIQUE

La présente invention est relative à un procédé de mesure de la surface d'onde d'un composant optique, ainsi qu'à un procédé de visualisation de la surface d'onde d'un composant optique.

Le procédé de mesure selon l'invention permet en particulier de mesurer les déformations de la surface d'onde d'un composant optique traité, liées aux hétérogénéités des traitements de surface appliqués sur ce composant optique lors de sa fonctionnalisation, tandis que le procédé de visualisation de la surface d'onde permet en particulier de localiser lesdites déformations.

### ÉTAT DE LA TECHNIQUE ANTÉRIEURE

Le contrôle de la surface d'onde d'un composant optique, traité ou non, se fait classiquement à l'aide d'un interféromètre, qui est souvent de type Fizeau. Avec cet interféromètre, on compare une surface d'onde de référence avec la surface d'onde à mesurer.

Si le composant optique est non traité, la surface d'onde mesurée par l'interféromètre correspond à un facteur près :

- soit à la déformation de la surface du composant optique, lorsqu'on effectue une mesure en réflexion ;
- soit à la mesure de la différence de chemin optique, liée au composant optique traversé (hétérogénéité d'épaisseur et/ou d'indice de réfraction), dans le cas d'une mesure en transmission.

Si le composant optique est traité, c'est-à-dire s'il comprend un traitement de surface tel qu'un antireflet ou un filtre, comme par exemple un miroir, une séparatrice, une dichroïque ou un polariseur, il faut alors en outre tenir compte de la réponse du traitement qui correspond à une lame de phase.

Or, il existe peu d'interféromètres qui permettent de mesurer la surface d'onde d'un composant optique traité si ce traitement n'est pas centré sur 633 nm ou 1064 nm. Il en résulte que le type de composants optiques traités dont il est possible de mesurer la surface d'onde (et en particulier la déformation de la surface d'onde) par interférométrie est très limité.

Par ailleurs, l'interférométrie est limitée en précision aux plans de référence utilisés, soit une précision comprise entre $\lambda/10$ et $\lambda/50$.

De plus, l'interférométrie tient compte de la qualité du substrat initial, ainsi que des contraintes induites par les traitements et subies par le composant optique.

L'inventeur s'est donc fixé comme but d'élaborer un procédé permettant de mesurer, et un procédé permettant de visualiser, la surface d'onde d'un composant optique traité, et en particulier la déformation de la surface d'onde liée au traitement déposé sur le composant optique, pour la plupart des traitements optiques pouvant être déposés sur un composant optique.

Les documents XP001514456 et XP004372710 divulguent des procédés de mesure d'une surface d'onde.

### EXPOSÉ DE L'INVENTION

Ce but est atteint par un procédé de mesure d'une surface d'onde issue d'une zone d'une face d'un composant optique formé d'un empilement comprenant un substrat et au moins une couche ayant des indices de réfraction différents, le procédé comprenant les étapes suivantes :

a) mesurer, en un point de référence $M_O$ situé dans la zone de la face du composant optique, la réponse spectrale dudit point de référence en fonction de la longueur d'onde d'une lumière passant par ledit point de référence et regrouper les mesures ainsi obtenues dans un spectre représentant la réponse spectrale en fonction de la longueur d'onde ;

b) dans le spectre obtenu à l'étape a), déterminer quelle est la portion de ce spectre pour laquelle l'écart entre un minimum et un maximum successifs ou entre un maximum et un minimum successifs du spectre est maximal et sélectionner une longueur d'onde, appelée longueur d'onde de mesure $\lambda_{mes}$, parmi les longueurs d'onde correspondant à cette portion du spectre ;

c) mesurer la réponse spectrale (appelée ci-dessous RSP) de n points de mesure $M_i$ situés dans ladite zone, n étant un nombre entier supérieur ou égal à 1, à la longueur d'onde de mesure $\lambda_{mes}$ : $RSP_{(Mi)}(\lambda_{mes})$ :

d) parmi les mesures obtenues à l'étape c), déterminer la réponse spectrale moyenne à la longueur d'onde de mesure : $RSP_{moy}(\lambda_{mes})$ ;

e) dans le spectre du point $M_o$ de référence obtenu à l'étape a), déterminer la longueur d'onde moyenne $\lambda_{moy}$ telle que $RSP_{Réf(Mo)}(\lambda_{moy}) = RSP_{moy}(\lambda_{mes})$ ;

f) pour chacun des n points $M_i$, avec i=1 à n :

1) déterminer la longueur d'onde $\lambda_i$ telle que la réponse spectrale au point $M_i$ à la longueur d'onde de mesure soit égale à la réponse spectrale au point $M_o$ de référence à la longueur d'onde $\lambda_i$ :

$$RSP_{Mi}(\lambda_{mes}) = RSP_{Réf(Mo)}(\lambda_i)$$

2) calculer l'écart entre le nombre d'onde $\sigma_i$ ($\sigma_i = 1/\lambda_i$) et le nombre d'onde moyen $\sigma_{moy}$ ($\sigma_{moy} = 1/\lambda_{moy}$) :

$$\Delta\sigma_i = \sigma_i - \sigma_{moy}$$

3) déterminer le nombre d'onde de centrage réel $\sigma_j$ au point $M_i$ :

$$\sigma_j = \sigma_{centrage} + \Delta\sigma_i$$

avec $\sigma_{centrage} = 1/\lambda_{centrage}$ et $\lambda_{centrage}$ étant la longueur d'onde de centrage du composant optique ;

4) calculer la longueur d'onde $\lambda_j$ correspondant au nombre d'onde de centrage réel au point $M_i$ :

$$\lambda_j = 1/\sigma_j$$

5) calculer la différence de phase $\Delta\Phi_{Mi}$ existant entre la phase de centrage réel $\Phi(\lambda_j)$ et la phase de centrage théorique $\Phi(\lambda_{centrage})$ à la longueur d'onde de centrage :

$$\Delta\Phi_{Mi} = \Phi(\lambda_j) - \Phi(\lambda_{centrage})$$

6) calculer la différence de marche $\delta_i$ existant au point $M_i$ à la longueur d'onde de centrage :

$$\delta_i = \Delta\Phi_{Mi} \times \lambda_{centrage} / (2\pi).$$

L'homme du métier sait comment déterminer la longueur d'onde de centrage d'un composant optique comprenant un substrat et au moins une couche. En fait, on réalise le spectre en transmission ou en réflexion du composant optique en fonction du nombre d'onde et le nombre d'onde de centrage est le nombre d'onde au niveau duquel le spectre représenté en nombres d'onde est approximativement symétrique. La longueur d'onde de centrage correspond alors à l'inverse du nombre d'onde de centrage ($1/\sigma_{centrage}$).

De préférence, le spectre obtenu à l'étape a) est réalisé sur une gamme de longueurs d'onde telle que l'écart entre la longueur d'onde la plus basse et la longueur d'onde la plus élevée de cette gamme de longueurs d'onde est au moins égal à 0,2 fois la longueur d'onde de centrage du composant optique.

Avantageusement, l'empilement comprend m couches, m étant un nombre entier supérieur ou égal à 2, les couches adjacentes parmi les m couches ayant des indices de réfraction différents. Il est à noter que chaque couche de l'empilement peut avoir une épaisseur différente.

Le calcul de la différence de phase $\Delta\Phi_{Mi}$ existant entre la phase de centrage réel $\Phi(\lambda_j)$ et la phase de centrage théorique $\Phi(\lambda_{centrage})$ à l'étape 6) du procédé peut être obtenu par toute méthode de calcul d'empilement de couches minces.

Selon une première variante, le calcul de la différence de phase $\Delta\Phi_{Mi}$ existant entre la phase de centrage réel

$\Phi(\lambda_j)$ et la phase de centrage théorique $\Phi(\lambda_{centrage})$ à l'étape 6) est réalisé en utilisant une méthode matricielle, comme par exemple le formalisme d'Abelès.

Selon une seconde variante, le calcul de la différence de phase $\Delta\Phi_{Mi}$ existant entre la phase de centrage réel $\Phi(\lambda_j)$ et la phase de centrage théorique $\Phi(\lambda_{centrage})$ à l'étape 6) est réalisé en utilisant une méthode vectorielle, comme par exemple la méthode de Schmith.

Le formalisme d'Abelès et la méthode de Schmith sont respectivement une méthode matricielle et une méthode vectorielle bien connues de l'homme du métier, qui permettent d'établir, à partir des paramètres d'épaisseur et d'indices de réfraction des différentes couches d'un empilement de couches, de déterminer la réflexion, la transmission, les variations de phase et l'absorption de cet empilement.

Avantageusement, la longueur d'onde de mesure $\lambda_{mes}$ est la longueur d'onde pour laquelle la portion dudit spectre obtenu à l'étape a) présente un point d'inflexion.

Selon une première variante, la réponse spectrale RPS est une réflexion.

Selon une seconde variante, la réponse spectrale RPS est une transmission.

Avantageusement, les n points de mesure $M_i$ sont répartis de manière homogène dans la zone à mesurer. De préférence, les n points de mesure $M_i$ sont équidistants.

L'invention concerne également un procédé de visualisation d'une surface d'onde d'une zone d'une face d'un composant optique comprenant un substrat et au moins une couche ayant des indices de réfraction différents. Le procédé de visualisation comprend les étapes du procédé de mesure décrit ci-dessus et comprend en outre une étape g), située à la suite des étapes du procédé de mesure, consistant à placer les n différences de marche $\delta_i$ des n points $M_i$ en fonction des coordonnées spatiales $(x_i, y_i)$ desdits n points dans la zone. On obtient ainsi une cartographie des différences de marche, ce qui correspond, à un facteur $2\pi / \lambda$ près, à une cartographie de la surface d'onde. Ce procédé de visualisation comprend donc la mesure de la différence de marche en chacun des points $M_i$ situés dans la zone de la face du composant optique à étudier et le placement de ces mesures aux endroits de la zone où elles ont été prises.

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des figures annexées parmi lesquelles :

- la figure 1 représente la réponse spectrale en transmission d'un miroir de formule S(HB)[11]H en fonction du nombre d'onde ;
- la figure 2 représente la réponse spectrale en réflexion d'un miroir de formule S(HB)[11]H en fonction de la longueur d'onde ;
- la figure 3 représente la cartographie en réflexion du miroir de formule S(HB)[11]H sur une zone de 79x26 mm$^2$ à 900 nm ;
- la figure 4 représente une cartographie de réponse spectrale de réflexion après un filtrage médian d'ordre 5 ;
- la figure 5 représente la variation de phase en fonction de la longueur d'onde d'un miroir S(HB)[11]H ayant un rapport d'indice de 1,37 pour un centrage à 1052 nm et pour un centrage à 1022 nm ;
- la figure 6 représente la cartographie de surface d'onde issue de la cartographie en réflexion illustrée dans la figure 4 exprimée en « épaisseur mécanique » en nm.

## EXPOSÉ DÉTAILLÉ DE MODES DE RÉALISATION PARTICULIERS

Le principe du procédé de mesure selon l'invention est basé sur le constat que toute hétérogénéité spatiale d'un composant optique constitué d'un empilement de couches peut se traduire par une variation de la longueur d'onde de centrage local de l'empilement, ce qui produit une variation de phase.

Nous allons illustrer le principe de l'invention en réalisant la cartographie de surface d'onde d'un composant optique qui est un miroir diélectrique (par exemple un miroir de Bragg).

Le miroir diélectrique choisi pour illustrer cet exemple est composé d'un substrat supportant 23 couches d'indices de réfraction alternés $n_H$ et $n_B$, $n_H$ étant l'indice des couches de haut indice et $n_B$ étant l'indice des couches de bas indice. Il peut par exemple s'agir d'un filtre passe-bande dans le domaine du proche infrarouge, constitué d'un empilement d'une alternance de couches minces diélectriques de couches de haut indice de réfraction et de bas indice de réfraction, déposé sur un support en verre.

Ici, le substrat est par exemple en borosilicate et a un indice de réfraction de 1,51, les couches d'indice $n_H$ sont des couches en zircone d'indice de réfraction de 1,68 et les couches d'indice $n_B$ sont des couches en silice d'indice de réfraction de 1,22. On précise par ailleurs que les couches sont ici déposées par un procédé sol-gel.

On commence par mesurer la réponse spectrale (en réflexion ou en transmission, au choix) du composant optique à tester en un point du composant, pris comme point de référence $M_o$, sur un domaine de longueurs d'onde assez large. Le spectre ainsi obtenu va nous permettre de déterminer la longueur d'onde de centrage et la largeur de bande du composant optique. On précise que, pour déterminer la longueur d'onde de centrage et la largeur de bande du composant optique, on peut indifféremment étudier le spectre en réflexion ou en transmission du composant optique (si le substrat est transparent) : on obtiendra les mêmes valeurs.

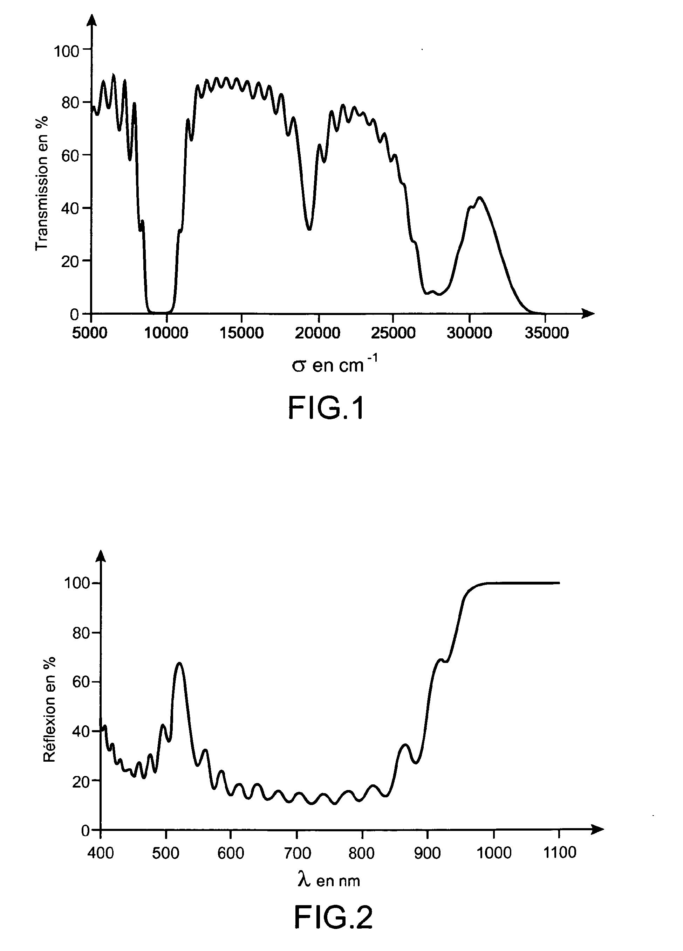

A titre d'exemple, la réponse spectrale en transmission du composant optique à tester sur une gamme de nombres d'onde allant de 5000 à 35000 cm$^{-1}$ (soit de 286 nm à 2000 nm en longueur d'onde) est représentée dans la figure 1.

A partir de ce spectre en transmission, on en déduit que le composant optique à tester a un nombre d'onde de centrage $\sigma_{centrage}$ égal à 9500 cm$^{-1}$ (soit une longueur d'onde de centrage $\lambda_{centrage}$ de 1052 nm). On constate également que ce composant a un rapport d'indice $n_H/n_B$ égal à 1,37 et qu'il comporte bien 23 couches.

Dans notre exemple, on choisit de réaliser la réponse spectrale en réflexion d'un point du composant optique à tester sur une gamme de longueurs d'onde allant de 400 nm à 950 nm : cette réponse spectrale en réflexion va être considérée comme étant la réponse spectrale de réflexion de référence $R_{réf(Mo)}$ et est représentée dans la figure 2.

Le comportement optique (réflexion, transmission, variation de phase) d'un tel composant optique peut être simulé par un empilement de formule $S(HB)^{11}H$, où S représente le substrat, H représente une couche d'indice de réfraction $n_H$ et B représente une couche d'indice de réfraction $n_B$, calculé, par exemple, à partir des formules d'Abelès. Le formalisme d'Abelès sera particulièrement utile pour calculer les variations de phase du composant optique, comme nous le verrons ci-dessous.

Dans le spectre en réflexion réalisé au point de référence $M_o$ (figure 2), on détermine quel est l'écart entre un minimum (creux de l'oscillation) et un maximum (sommet de l'oscillation) successifs ou entre un maximum et un minimum successifs du spectre qui est le plus grand. En fait, on détermine l'écart maximal entre deux extremas successifs du spectre, les deux extremas étant un minimum et un maximum. On choisit alors une longueur d'onde parmi les longueurs d'onde correspondant à la portion de spectre comprise entre le minimum et le maximum ou le maximum et le minimum de cet écart maximal ainsi déterminé. Cette longueur d'onde (appelée longueur d'onde de mesure) sera par la suite utilisée pour réaliser la cartographie de la réponse spectrale d'une zone du composant optique, cette zone comprenant le point de référence et pouvant par exemple représenter l'ensemble d'une face du composant optique.

Afin d'obtenir une bonne précision sur la mesures des hétérogénéités du composant optique, la longueur d'onde de mesure est choisi de préférence sur les fronts de montée ou de descente de la réponse spectrale du composant optique, le plus souvent au point d'inflexion.

Dans la figure 2, on constate que, parmi les points d'inflexion du spectre, celui situé à 900 nm est situé sur un front de montée dont la pente semble être la plus abrupte. De plus, à 900 nm, la réflexion est moyenne et est égale à 40%. En fait, ce qui est important pour le choix de la longueur d'onde de mesure, c'est d'avoir le plus grand domaine spectral où le coefficient de réflexion ou de transmission varie linéairement avec la longueur d'onde, avec une variation non nulle. Dans le spectre représenté dans la figure 2, on constate ainsi que 900 nm peut donc être une longueur d'onde de mesure $\lambda_{mes}$ adéquate pour représenter la surface d'onde du composant optique.

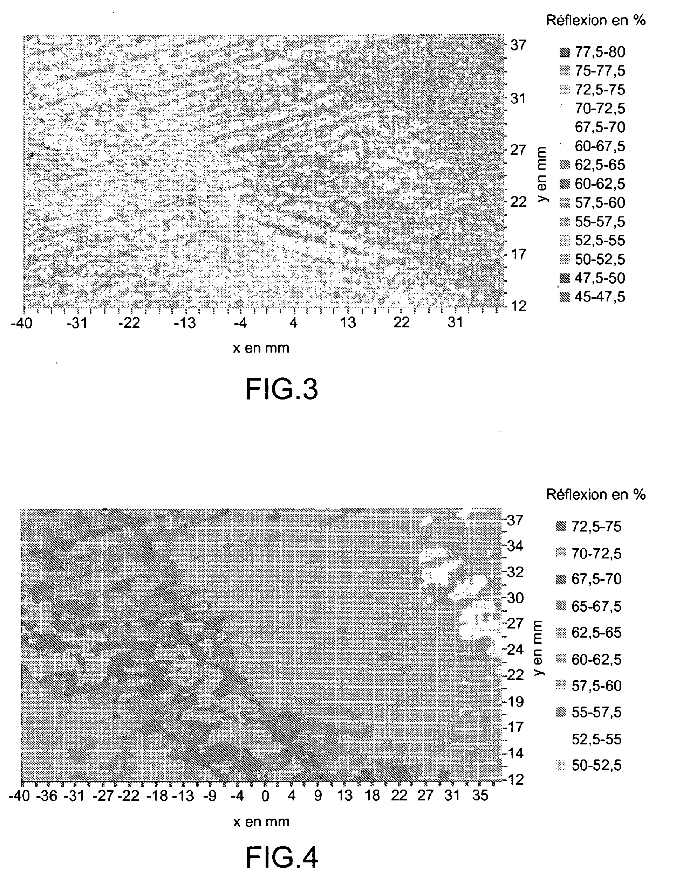

Après avoir choisi la longueur d'onde de mesure, on réalise ensuite une cartographie en réflexion à la longueur d'onde de mesure $\lambda_{mes}$ de la zone du composant optique sur laquelle on souhaite mesurer la surface d'onde. Dans la figure 3 est représentée une cartographie en réflexion réalisée à une longueur d'onde de 900 nm sur une zone de 79x26 mm$^2$ du miroir diélectrique à tester de formule $S(HB)^{11}H$.

Avant de transformer les mesures de réflexion de cette cartographie de réflexion en des mesures de surface d'onde, il peut être nécessaire de traiter les mesures de réflexion à l'aide de filtres linéaires ou non-linéaires, par exemple un filtre de type moyenneur ou un filtre de type médian, afin d'éliminer les défauts locaux résiduels réels (rayures, piqûres...) ou dus à la présence de poussières en surface du composant optique.

Le principe du filtre moyenneur consiste à remplacer une mesure prise en un point A par une moyenne pondérée des mesures prises au niveau des points adjacents au point A.

Le principe du filtre médian consiste à remplacer une mesure prise en un point A par la valeur médiane de toutes les mesures prises au niveau des points situés dans une fenêtre centrée sur le point A.

Par exemple, la figure 4 représente la cartographie de réflexion de la figure 3 après un filtrage médian d'ordre 5.

La transformation de la cartographie de réflexion en cartographie de surface d'onde est obtenue en déterminant, pour chaque point $M_i$ du composant optique, son écart par rapport au centrage théorique. Cet écart par rapport au centrage théorique est ensuite transformé en déphasage $\Phi$. Ce déphasage $\Phi$ est à son tour transformé en différence de marche $\delta$. La différence de marche $\delta$ peut être transformée en épaisseur mécanique, en multipliant la différence de marche $\delta$ par un facteur égal à 0,5 (s'il s'agit d'une réponse spectrale en réflexion) ou à 1 (s'il s'agit d'une réponse spectrale en transmission). La cartographie de la surface d'onde du composant optique peut être visualisée en réalisant une cartographie de marche ou « d'épaisseur mécanique ».

Le déphasage $\Phi$ peut être obtenu en utilisant le formalisme matriciel d'Abelès. En effet, le formalisme d'Abelès permet d'obtenir la réflexion, la transmission, l'absorption, ainsi que la phase d'un empilement de couches optiques. Ce formalisme consiste en de simples multiplications de matrices 2x2, à raison d'une matrice par couche optique considérée.

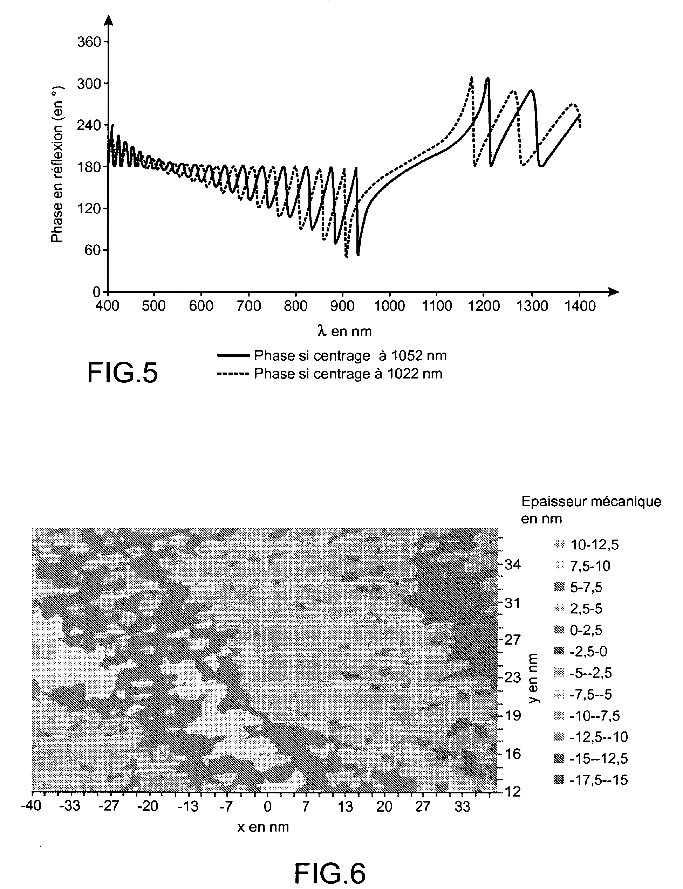

A titre d'illustration, la figure 5 montre l'évolution spectrale de la phase théorique en réflexion d'un miroir diélectrique de formule $S(HB)^{11}H$ ayant un rapport d'indice de 1,37, lorsque le miroir a une longueur d'onde de centrage à 1052 nm et lorsqu'il a une longueur d'onde de centrage à 1022 nm (ligne en pointillés). A partir de ces données, on peut déduire la différence de phase $\Delta\Phi$ existant lorsque le miroir est hétérogène et, qu'au lieu d'avoir une longueur d'onde de centrage à 1052 nm, a en fait une longueur d'onde de centrage réelle de 1022 nm. Un miroir ayant une telle hétérogénéité spatiale présentera une variation de phase à la longueur d'onde d'utilisation, par exemple 1054 nm, $\Delta\Phi$ (1054) = $\Phi_{1052}$ (1054) - $\Phi_{1022}$ (1054) = 11°35, cette valeur pouvant être exprimée en différence de marche (ou différence de chemin optique) par la relation $\Delta\Phi = 360 \times \delta / \lambda$, soit ici 33 nm, et cette valeur étant équivalente à une « épaisseur mécanique » de 16,5 nm.

La procédure pour mesurer et visualiser une surface d'onde selon l'invention est récapitulée ci-dessous.

Tout d'abord, on réalise un spectre en réflexion [en transmission] en fonction de la longueur d'onde en un point $M_o$, situé dans la zone du composant optique dont on souhaite connaitre l'effet d'un traitement sur la surface d'onde ; ce point $M_o$ est choisi comme point de référence. On sélectionne ensuite dans ce spectre une longueur d'onde de mesure $\lambda_{mes}$ et on mesure la réflexion en n points de mesure $M_i$ situés dans la zone à étudier du composant optique à la longueur d'onde de mesure $\lambda_{mes}$ (n étant un nombre entier supérieur ou égal à 1 et i=1 à n) : $R_{(Mi)}(\lambda_{mes})$. Par exemple, pour une zone ayant une surface de $79 \times 26$ $mm^2$, on réalise ici 179 points sur 105 points de mesure.

On fait la moyenne de tous ces points de mesure et on détermine ainsi la réflexion [la transmission] moyenne à la longueur d'onde de mesure dans la zone de mesure : $R_{moy}(\lambda_{mes})$ [$T_{moy}(\lambda_{mes})$].

On recherche ensuite dans le spectre en réflexion [en transmission] de référence au point $M_o$ pour quelle longueur d'onde (appelée longueur d'onde moyenne $\lambda_{moy}$) la réflexion [la transmission] moyenne à la longueur d'onde de mesure est égale à la réflexion [transmission] de référence au point $M_o$ à la longueur d'onde moyenne, c'est-à-dire $R_{moy}(\lambda_{mes}) = R_{Réf(Mo)}(\lambda_{moy})$ [$T_{moy}(\lambda_{mes}) = T_{Réf(Mo)}(\lambda_{moy})$].

Cela permet alors d'obtenir le nombre d'onde moyen : $\sigma_{moy} = 1/\lambda_{moy}$.

A partir de là, pour chacun des n points $M_i$, on réalise les étapes suivantes :

- on détermine à partir du spectre de référence au point $M_o$ quelle est la longueur d'onde $\lambda_i$ pour laquelle la réflexion [transmission] au point $M_i$ à la longueur d'onde de mesure est égale à la réflexion [transmission] de référence au point $M_o$ à la longueur d'onde $\lambda_i$ :

$$R_{Mi}(\lambda_{mes}) = R_{Réf(Mo)}(\lambda_i)$$

$$[T_{Mi}(\lambda_{mes}) = T_{Réf(Mo)}(\lambda_i)]$$

- on calcule les nombres d'ondes $\sigma_i$ correspondant aux longueurs d'ondes $\lambda_i$ :

$$\sigma_i = 1/\lambda_i$$

- on calcule les écarts entre les nombres d'onde $\sigma_i$ et le nombre d'onde moyen $\sigma_{moy}$ :

$$\Delta\sigma_i = \sigma_i - \sigma_{moy}$$

- on détermine le nombre d'onde de centrage réel $\sigma_j$ au point $M_i$ par rapport au nombre d'onde de centrage $\sigma_{centrage}$ :

$$\sigma_j = \sigma_{centrage} + \Delta\sigma_i$$

- on calcule la longueur d'onde de centrage réel $\lambda_j$ correspondant au nombre d'onde de centrage réel au point $M_i$ :

$$\lambda_j = 1/\sigma_j$$

- on calcule la différence de phase théorique $\Delta\Phi_{Mi}$ existant entre la phase de centrage réel $\Phi(\lambda_j)$ et la phase de centrage théorique $\Phi(\lambda_{centrage})$ :

$$\Delta\Phi_{Mi} = \Phi(\lambda_j) - \Phi(\lambda_{centrage})$$

- on calcule la différence de marche $\delta_i$ existant au point $M_i$ :

$$\delta_i = \Delta\Phi_{Mi} \times \lambda_{centrage} / (2\pi)$$

Les différences de marche $\delta_i$ obtenues pour chacun des points $M_i$ peuvent ensuite être multipliées par un facteur F, selon que l'onde est réfléchie (F = 0,5) ou transmise (F = 1), ce qui nous permet d'obtenir « l'épaisseur mécanique équivalente » en chaque point $M_i$.

En disposant ces différences de marche $\delta_i$ ou ces « épaisseurs mécaniques équivalentes » selon les coordonnées géographiques des points $M_i$ auxquels elles sont liées, il est possible de réaliser une cartographie représentant la surface d'onde. Il est ainsi possible de visualiser la surface d'onde. Une telle cartographie de surface d'onde exprimée en épaisseur mécanique est représentée dans la figure 6. Dans cette figure 6, les épaisseurs mécaniques sont exprimées en nanomètres (voir l'échelle de gris sur la droite).

Il est à noter que les exemples ci-dessus sont relatifs à des réponses spectrales en réflexion. Néanmoins, il est tout à fait possible de réaliser, selon le même principe, une cartographie de la surface d'onde d'un composant optique à partir d'une réponse spectrale en transmission (voir les passages ci-dessus mis entre crochets).

Par ailleurs, les procédés selon l'invention peuvent être appliqués sur des composants optiques autres que celui décrit ci-dessus, par exemple des empilements de formule générale $S(H_kB_l)^m$ où les $H_k$ sont des couches à haut indice de réfraction ayant une épaisseur $e_k$, les $B_l$ sont des couches à bas indice de réfraction ayant une épaisseur $e_l$, S le substrat et m le nombre de couches de l'empilement. Il suffit que le composant optique à tester soit un empilement de couches optiques alternées de deux indices de réfraction différents, un formalisme matriciel, comme par exemple le formalisme d'Abelès, pouvant alors être utilisé pour calculer les variations de phase du composant optique.

L'originalité du procédé selon l'invention est qu'il fournit des informations en termes de surface d'onde au moyen de mesures spectrophotomètriques, c'est-à-dire au moyen de mesures de réflexion ou de transmission.

Le procédé de mesure de la surface d'onde d'un composant optique selon l'invention permet de mesurer la déformation de la surface d'onde d'un composant optique liée à l'hétérogénéité du traitement déposé sur le composant et ainsi, de visualiser les modifications de la surface d'onde d'un composant optique quelque soit sa longueur d'onde d'utilisation. Cela permet en particulier de repérer la présence d'hétérogénéités provoqués par le dépôt physique ou chimique d'une ou de plusieurs couches minces sur le composant. Le procédé selon l'invention permet ainsi de contrôler la déformation de la surface d'onde liée uniquement aux traitements optiques du composant optique en étudiant la surface d'onde issue de ce composant après une réflexion ou une transmission, indépendamment de la nature du polissage du composant et des contraintes du traitement optique réalisé sur le composant.

Un tel procédé de mesure est particulièrement utile pour contrôler des composants optiques subissant des traitements diélectriques et comprenant de nombreuses couches, comme par exemple les filtres (polariseurs ou miroirs), dont le bon fonctionnement nécessite la présence d'une surface d'onde homogène.

## Revendications

1.  Procédé de mesure d'une surface d'onde issue d'une zone d'une face d'un composant optique formé d'un empilement comprenant un substrat et au moins une couche ayant des indices de réfraction différents, le procédé comprenant les étapes suivantes :

    a) mesurer, en un point de référence $M_o$ situé dans la zone de la face du composant optique, la réponse spectrale RSP dudit point de référence en fonction de la longueur d'onde $\lambda$ d'une lumière passant par ledit point de référence et regrouper les mesures ainsi obtenues dans un spectre représentant la réponse spectrale en fonction de la longueur d'onde ;

b) dans le spectre obtenu à l'étape a), déterminer quelle est la portion de ce spectre pour laquelle l'écart entre un minimum et un maximum successifs ou entre un maximum et un minimum successifs du spectre est maximal et sélectionner une longueur d'onde, appelée longueur d'onde mesure $\lambda_{mes}$, parmi les longueurs d'onde correspondant à cette portion du spectre ;

c) mesurer la réponse spectrale de n points de mesure $M_i$ situés dans ladite zone, n étant un nombre entier supérieur ou égal à 1, à la longueur d'onde de mesure $\lambda_{mes}$ : $RSP_{(Mi)}(\lambda_{mes})$ ;

d) parmi les mesures obtenues à l'étape c), déterminer la réponse spectrale moyenne à la longueur d'onde de mesure : $RSP_{moy}(\lambda_{mes})$ ;

e) dans le spectre du point $M_o$ de référence obtenu à l'étape a), déterminer la longueur d'onde moyenne $\lambda_{moy}$ telle que $RSP_{Réf(Mo)}(\lambda_{moy}) = RSP_{moy}(\lambda_{mes})$ ;

f) pour chacun des n points $M_i$, avec i=1 à n :

1) déterminer la longueur d'onde $\lambda_i$ telle que la réponse spectrale au point $M_i$ à la longueur d'onde de mesure soit égale à la réponse spectrale au point $M_o$ de référence à la longueur d'onde $\lambda_i$ :

$$RSP_{Mi}(\lambda_{mes}) = RSP_{Réf(Mo)}(\lambda_i)$$

2) calculer l'écart entre le nombre d'onde $\sigma_i$ ($\sigma_i = 1/\lambda_i$) et le nombre d'onde moyen $\sigma_{moy}$ ($\sigma_{moy} = 1/\lambda_{moy}$) :

$$\Delta\sigma_i = \sigma_i - \sigma_{moy}$$

3) déterminer le nombre d'onde de centrage réel $\sigma_j$ au point $M_i$ :

$$\sigma_j = \sigma_{centrage} + \Delta\sigma_i$$

avec $\sigma_{centrage} = 1/\lambda_{centrage}$ et $\lambda_{centrage}$ étant la longueur d'onde de centrage du composant optique ;

4) calculer la longueur d'onde $\lambda_j$ correspondant au nombre d'onde de centrage réel au point $M_i$ :

$$\lambda_j = 1/\sigma_j$$

5) calculer la différence de phase $\Delta\Phi_{Mi}$ existant entre la phase de centrage réel $\Phi(\lambda_j)$ et la phase de centrage théorique $\Phi(\lambda_{centrage})$ à la longueur d'onde de centrage :

$$\Delta\Phi_{Mi} = \Phi(\lambda_j) - \Phi(\lambda_{centrage})$$

6) calculer la différence de marche $\delta_i$ existant au point $M_i$ à la longueur d'onde de centrage :

$$\delta_i = \Delta\Phi_{Mi} \times \lambda_{centrage} / (2\pi).$$

2. Procédé de mesure d'une surface d'onde selon la revendication 1, dans lequel l'empilement comprend m couches, m étant un nombre entier supérieur ou égal à 2, les couches adjacentes parmi les m couches ayant des indices de réfraction différents.

3. Procédé de mesure d'une surface d'onde selon la revendication 1 ou 2, dans lequel le calcul de la différence de phase $\Delta\Phi_{Mi}$ existant entre la phase de centrage réel $\Phi(\lambda_j)$ et la phase de centrage théorique $\Phi(\lambda_{centrage})$ à l'étape 6) est réalisé en utilisant une méthode matricielle, comme par exemple le formalisme d'Abelès.

4. Procédé de mesure d'une surface d'onde selon la revendication 1 ou 2, dans lequel le calcul de la différence de phase $\Delta\Phi_{Mi}$ existant entre la phase de centrage réel $\Phi(\lambda_j)$ et la phase de centrage théorique $\Phi(\lambda_{centrage})$ à l'étape 6) est réalisé en utilisant une méthode vectorielle, comme par exemple le formalisme de Schmith.

5. Procédé de mesure d'une surface d'onde selon la revendication 1 ou 2, dans lequel la longueur d'onde de mesure $\lambda_{mes}$ est la longueur d'onde pour laquelle la portion dudit spectre obtenu à l'étape a) présente un point d'inflexion.

6. Procédé de mesure d'une surface d'onde selon l'une quelconque des revendications 1 à 5, dans lequel la réponse spectrale RPS est une réflexion.

7. Procédé de mesure d'une surface d'onde selon l'une quelconque des revendications 1 à 5, dans lequel la réponse spectrale RPS est une transmission.

8. Procédé de mesure d'une surface d'onde selon la revendication 1 ou 2, dans lequel les n points de mesure $M_i$ sont répartis de manière homogène dans la zone à mesurer.

9. Procédé de visualisation d'une surface d'onde d'une zone d'une face d'un composant optique comprenant un substrat et au moins une couche ayant des indices de réfraction différents, **caractérisé en ce qu'**il comprend les étapes du procédé de mesure selon l'une quelconque des revendications 1 à 8 et comprend en outre une étape g) consistant à placer les n différences de marche $\delta_i$ des n points $M_i$ en fonction des coordonnées spatiales $(x_i, y_i)$ desdits n points dans la zone.

**Claims**

1. A method for measuring a wave surface derived from a zone of a face of an optical component formed of a stack including a substrate and at least one layer having different refraction indices, wherein the method includes the following steps:

a) measuring, at a reference point $M_o$ located in the zone of the face of the optical component, the spectral response RSP of the said reference point as a function of the wavelength $\lambda$ of a light passing through the said reference point, and grouping together the measurements obtained in this manner in a spectrum representing the spectral response as a function of the wavelength;
b) in the spectrum obtained in step a), determining which portion of this spectrum is the one for which the difference between a successive minimum and maximum, or between a successive maximum and minimum, of the spectrum is greatest, and selecting a wavelength, called the measurement wavelength $\lambda_{meas}$, from among the wavelengths corresponding to this portion of the spectrum;
c) measuring the spectral response of n measuring points $M_i$ located in the said zone, where n is an integer greater than or equal to 1, at the measurement wavelength $\lambda_{meas}$: $RSP_{(Mi)}(\lambda_{meas})$;
d) among the measurements obtained in step c), determining the average spectral response to the measurement wavelength: $RSP_{av}(\lambda_{meas})$;
e) in the spectrum of reference point $M_o$ obtained in step a), determining the average wavelength $\lambda_{av}$ such that $RSP_{Ref(Mo)}(\lambda_{av}) = RSP_{av}(\lambda_{meas})$;
f) for each of the n points $M_i$, with i=1 to n:

1) determining the wavelength $\lambda_i$ such that the spectral response at point $M_i$ to the measurement wavelength is equal to the spectral response at reference point $M_o$ to the wavelength $\lambda_i$:

$$RSP_{Mi}(\lambda_{meas}) = RSP_{Ref(Mo)}(\lambda_i)$$

2) calculating the difference between the wave number $\sigma_i$ ($\sigma_i = 1/\lambda_i$) and the average wave number $\sigma_{av}$ ($\sigma_{av} = 1/\lambda_{av}$):

$$\Delta\sigma_i = \sigma_i - \sigma_{av}$$

3) determining the real centring wave number $\sigma_j$ at point $M_i$:

$$\sigma_j = \sigma_{centring} + \Delta\sigma_i$$

with $\sigma_{centring} = 1/\lambda_{centring}$ and $\lambda_{centring}$ being the centring wavelength of the optical component;
4) calculating the wavelength $\lambda_j$ corresponding to the real centring wave number at point $M_i$:

$$\lambda_j = 1/\sigma_j$$

5) calculating the phase difference $\Delta\Phi_{Mi}$ existing between the real centring phase $\Phi(\lambda_j)$ and the theoretical centring phase $\Phi(\lambda_{centring})$ at the centring wavelength:

$$\Delta\Phi_{Mi} = \Phi(\lambda_j) - \Phi(\lambda_{centring})$$

6) calculating the path difference $\delta_i$ existing at point $M_i$ at the centring wavelength:

$$\delta_i = \Delta\Phi_{Mi} \times \lambda_{centring}/(2\pi).$$

2. A method for measuring a wave surface according to claim 1, in which the stack includes m layers, where m is an integer greater than or equal to 2, and where the adjacent layers among the m layers have different refraction indices.

3. A method for measuring a wave surface according to claim 1 or 2, in which the calculation of the phase difference $\Delta\Phi_{Mi}$ existing between the real centring phase $\Phi(\lambda_j)$ and the theoretical centring phase $\Phi(\lambda_{centring})$ in step 6) is accomplished using a matrix method, such as for example the Abeles formalism.

4. A method for measuring a wave surface according to claim 1 or 2, in which the calculation of the phase difference $\Delta\Phi_{Mi}$ existing between the real centring phase $\Phi(\lambda_j)$ and the theoretical centring phase $\Phi(\lambda_{centring})$ in step 6) is accomplished using a vector method, such as for example the Schmith formalism.

5. A method for measuring a wave surface according to claim 1 or 2, in which the measurement wavelength $\lambda_{meas}$ is the wavelength for which the portion of the said spectrum obtained in step a) has an inflection point.

6. A method for measuring a wave surface according to any of the claims 1 to 5, in which the RPS spectral response is a reflection.

7. A method for measuring a wave surface according to any of the claims 1 to 5, in which the RPS spectral response is a transmission.

8. A method for measuring a wave surface according to claim 1 or 2, in which the n measuring points $M_i$ are distributed uniformly in the zone to be measured.

9. A method for viewing a wave surface of a zone of a face of an optical component including a substrate and a least one layer having different refraction indices, **characterised in that** it includes the steps of the measurement method according to any of the claims 1 to 8 and also includes a step g) consisting in placing the n path differences $\delta_i$ of the n points $M_i$ according to the spatial coordinates $(x_i, y_i)$ of the said n points in the zone.

**Patentansprüche**

1. Verfahren zum Messen einer Wellenoberfläche, die von einer Zone einer Seite bzw. Fläche eines optischen Bauteils ausgeht, das von einem Stapel gebildet wird, der ein Substrat und wenigstens eine Schicht mit voneinander verschiedenem Brechungsindex umfasst, wobei das Verfahren die folgenden Stufen bzw. Schritte aufweist:

a) in einem in der Zone der Fläche des optischen Bauteils gelegenen Bezugspunkt $M_O$ wird das spektrale Ansprechverhalten RSP des Bezugspunkts in Abhängigkeit von der Wellenlänge $\lambda$ eines durch den genannten Bezugspunkt verlaufenden Lichts gemessen und die so erhaltenen Meßwerte in einem das spektrale Ansprechverhalten in Abhängigkeit von der Wellenlänge wiedergebenden Spektrum gruppiert;

b) in dem in dem Schritt bzw. der Stufe a) erhaltenen Spektrum wird bestimmt, für welchen Teil dieses Spektrums der Abstand zwischen einem Minimum und einem darauf folgenden Maximum oder der Abstand zwischen einem Maximum und einem darauf folgenden Minimum einen maximalen Wert besitzt und aus den diesem Teil des Spektrums entsprechenden Wellenlängen eine als Messwellenlänge $\lambda_{mes}$ bezeichnete Wellenlänge ausgewählt;

c) von n in der genannten Zone liegenden Messpunkten $M_i$, wobei n eine ganze Zahl größer als oder gleich 1 ist, wird das spektrale Ansprechverhalten bei der Messwellenlänge $\lambda_{mes}$ gemessen: $RSP_{(Mi)}(\lambda_{mes})$;

d) unter den in der Stufe bzw. dem Schritt c) erhaltenen Messwerten wird der mittlere spektrale Ansprechwert bei der Messwellenlänge bestimmt: $RSP_{moy}(\lambda_{mes})$;

e) in dem im Verfahrensschritt a) erhaltenen Spektrum des Bezugspunkts $M_O$ bestimmt man die mittlere Wellenlänge $\lambda_{moy}$ derart, dass $RSP_{Ref(Mo)}(\lambda_{moy}) = RSP_{moy}(\lambda_{mes})$;

f) für jeden der n Punkte $M_i$, mit i = 1 bis n, folgt nun:

1) Bestimmen der Wellenlänge $\lambda_i$ derart, dass das spektrale Ansprechverhalten im Punkt $M_i$ bei der Messwellenlänge gleich dem spektralen Ansprechverhalten im Bezugspunkt $M_0$ bei der Wellenlänge $\lambda_i$ ist:

$$RSP_{Mi}(\lambda_{mes}) = RSP_{Ref(Mo)}(\lambda_i)$$

2) Berechnen des Abstands zwischen der Wellenzahl $\sigma_i$ ($\sigma_i = 1/\lambda_i$) und der mittleren Wellenzahl $\sigma_{moy}$ ($\sigma_{moy} = 1/\lambda_{moy}$):

$$\Delta\sigma_i = \sigma_i - \sigma_{moy}$$

3) Bestimmen der realen Zentrierungswellenzahl $\sigma_j$ im Punkt $M_i$:

$$\sigma_j = \sigma_{centrage} + \Delta\sigma_i$$

mit $\sigma_{centrage} = 1/\lambda_{centrage}$ und $\lambda$ centrage als der Zentrierungswellenlänge des optischen Bauteils;

4) Bestimmen der Wellenlänge $\lambda_j$, welche der realen Zentrierungs-Wellennzahl im Punkt $M_j$ entspricht:

$$\lambda_j = 1/\sigma_j$$

5) Berechnen der Phasendifferenz $\Delta\Phi_{Mi}$, die zwischen der realen Zentrierungsphase $\Phi(\lambda_j)$ und der theoretischen Zentrierungsphase $\Phi(\lambda_{centrage})$ bei der Zentrierungswellenlänge besteht:

$$\Delta\Phi_{Mi} = \Phi(\lambda_j) - \Phi(\lambda_{centrage})$$

6) Berechnen der Gangdifferenz $\delta_i$, die in dem Punkt $M_i$ bei der Zentrierungswellenlänge besteht:

$$\delta_i = \Delta \Phi_{Mi} \times \lambda_{centrage} / (2\pi).$$

**2.** Verfahren zum Messen einer Wellenoberfläche nach Anspruch 1, bei welchem der Schichtstapel m Schichten umfasst, mit m einer ganzen Zahl größer als oder gleich 2, und bei welchem unter den m Schichten die jeweils benachbarten Schichten jeweils voneinander verschiedene Brechungsindizes haben.

**3.** Verfahren zum Messen einer Wellenoberfläche nach Anspruch 1 oder 2, bei welchem die Berechnung der Phasendifferenz $\Delta\Phi_{Mi}$ zwischen der realen Zentrierungsphase $\Phi(\lambda_j)$ und der theoretischen Zentrierungsphase $\Phi(\lambda_{centrage})$ in der Verfahrensstufe 6) unter Anwendung einer Matrix-Methode erfolgt, beispielsweise des Abelés-Formalismus.

**4.** Verfahren zum Messen einer Wellenoberfläche nach Anspruch 1 oder 2, bei welchem die Berechnung der Phasendifferenz $\Delta\Phi_{Mi}$ zwischen der realen Zentrierungsphase $\Phi(\lambda_j)$ und der theoretischen Zentrierungsphase $\Phi(\lambda_{centrage})$ in der Verfahrensstufe 6) unter Anwendung einer vektoriellen Methode erfolgt, beispielsweise des Schmith-Formalismus.

**5.** Verfahren zum Messen einer Wellenoberfläche nach Anspruch 1 oder 2, bei welchem die Messwellenlänge $\lambda_{mes}$ diejenige Wellenlänge ist, bei welcher der in dem Verfahrensschritt bzw. der Stufe a) erhaltene Teil des Spektrums einen Wendepunkt besitzt.

**6.** Verfahren zum Messen einer Wellenoberfläche nach einem beliebigen der Ansprüche 1 bis 5, bei welchem das spektrale Ansprechverhalten RPS eine Reflexion ist.

**7.** Verfahren zum Messen einer Wellenoberfläche nach einem beliebigen der Ansprüche 1 bis 5, bei welchem das spektrale Ansprechverhalten RSP eine Lichttransmission ist.

**8.** Verfahren zum Messen einer Wellenoberfläche nach Anspruch 1 oder 2, bei welchem die n Messpunkte $M_i$ homogen in der zu vermessenden Zone verteilt sind.

**9.** Verfahren zur Visualisation (Sichtdarstellung) einer Wellenfläche einer Zone an einer Fläche eines optischen Bauteils, welches ein Substrat und wenigstens eine Schicht mit voneinander verschiedenem Brechungsindex umfasst, **dadurch gekennzeichnet, dass** das Verfahren die Verfahrensstufen bzw. -schritte des Messverfahrens nach einem beliebigen der Ansprüche 1 bis 8 umfasst und des Weiteren eine Stufe bzw. einen Schritt g), der darin besteht, die n Gangunterschiede $\delta_i$ der n Punkte $M_i$ in Abhängigkeit von den räumlichen Koordinaten $(x_i, y_i)$ der n Punkte in der Zone zu verteilen.

FIG.1

FIG.2

**FIG.3**

**FIG.4**

FIG.5 —— Phase si centrage à 1052 nm
------ Phase si centrage à 1022 nm

FIG.6